# EUROPEAN PATENT SPECIFICATION

(11) **EP 1 110 974 B1**
(45) Date of publication and mention of the grant of the patent: **28.11.2007**
(21) Application number: 00127961.1
(22) Date of filing: 05.08.1993
(51) Int. Cl.: C08F 4/64, C08F 4/02, C08F 10/00

(54) **Method for preparing a supported activator component**
Verfahren zur Herstellung von einem geträgertem Aktivatorkomponenten
Procédé de préparation d'un activateur sur support

(30) Priority: 05.08.1992 US 926006
(43) Date of publication of application: 27.06.2001
(62) Divisional of application: 93918651.6
(73) Proprietor: ExxonMobil Chemical Patents Inc., Baytown, TX 77520-5200 (US)
(72) Inventor: Upton, David Jonathan, Pasadena, TX 77503 (US); Hlatky, Gregory George, Morrow, Ohio 45152 (US); Canich, Jo Ann Marie, Houston, TX 77059 (US); Turner, Howard William, Campbell, California 95008 (US)
(74) Representative: Veldhuizen, Albert Dirk Willem

(56) References cited:
- EP-A- 0 522 581
- WO-A-91/09882
- WO-A-92/00333
- WO-A-93/11172

## Description

### Background of the Invention

### 1. Field of the Invention

The invention relates to methods for preparing supported ion-exchange catalysts useful for polymerization of olefins, diolefins, cyclic olefins and acetylenically unsaturated monomers.

### 2. Background

European Patent Application 277,003, 277,004 and PCT International Application WO 92/00333 describe an advance in Group 4 transition metal catalysts; a new catalyst which does not require either an alkyl aluminum or alumoxane as an activator. The Group 4 transition metal catalyst is prepared as a reaction product of a transition metal compound and an ionic activator compound. The ionic activator comprises a cation which will irreversibly react with at least one ligand contained in Group 4 metal compound and a labile, bulky (approximately 4 angstroms or larger) anion which is a single coordination complex having a plurality of lipophilic radicals covalently coordinated to and shielding a central charge-bearing metal or metalloid atom, the bulk of said anion being such that upon reaction, the activator is sterically hindered from covalently coordinating to the metal cation. Hence an active catalytic species of a transition metal is formed, namely an ionic pair comprising a transition metal cation paired with the noncoordinating anion of the activator component.

The new transition metal catalyst system (hereafter referred to as an "ionic catalyst") eliminates the need for an expensive alumoxane activator. The ionic catalyst also offers other advantages over the alumoxane activated catalysts such as: (1) high weight average molecular weight; (2) high catalytic activity; (3) good incorporation of comonomers; and (4) the control of the chain end chemistry of the polymer.

Homogeneous ionic catalyst generally cannot be practically used for gas phase polymerization. The use of a supported catalyst offers the possibility of gas phase compatibility. Control of the particle size distribution of the polymeric product in the various polymerization processes eliminates or reduces the extent of reactor fouling.

Supported catalyst for olefin polymerization are well known in the art. These catalysts offer, among others, the advantages of being usable in gas or slurry phase reactors, allowing the control of polymer particle size and thereby the control of product bulk density. Gas phase reactors also eliminate the need for a solvent and the equipment for solvent handling the separation. However, the known Ziegler-Natta olefin polymerization supported catalysts also present disadvantages which include broad MWD and broad CD, inefficient incorporation of comonomers, poor sequence distribution and, in the case of lower activity catalysts, the need for a product deashing step.

Supported transition metal-alumoxane catalysts such as described in U.S. Patent 4,897,455 of Welborn and U.S. Patent 5,086,025 of Chang and US 5,057,475 of Canich describe catalysts obtained by reacting a transition metal and an alumoxane in the presence of the solid support material. The catalysts are prepared either by reaction of a thermally dehydrated support with alumoxane solution or by the reaction of a hydrated silica gel with an alkylaluminum to generate surface-supported alumoxanes in situ. The supported catalyst may then be employed either as the sole catalyst component or in combination with an organometallic cocatalyst. The supported transition metal-alumoxane catalyst generally produce polymers of lower molecular weight and comonomer incorporation than their unsupported counterpart.

It is known that ionic catalysts are deactivated by Lewis bases. Hence it is a practice not to support ionic catalysts on support materials such as silica.

Supported ionic catalysts containing bis-cyclopentadienyl ("bis-Cp") moieties are described in PCT WO 91/09882. These bis-Cp catalysts provide a supported ionic catalyst for gas or slurry phase olefin polymerization. They are capable of providing a polymer product having a high molecular weight, narrow MWD and CD, good comonomer incorporation, good sequence distribution, uniform particles of high bulk denisty and controlled particle size for ease of removal from the reactor.

WO93/11172 describes covalent combination of an ionic activator and a synthon. EP522581 describes methods for preparing supported catalysts using mineral oxide supports combined with an ionic activator and a transition metal complex.

It would be desirable to provide a supported ionic catalyst capable of not only producing polymers with the above properties but also include polymers of low density, with optional high molecular weight. Additionally, it would be desirable to produce a catalyst with low hydrogen sensitivity so as to allow use of hydrogen to control molecular weight in, for example, a gas phase polymerization reactor.

### SUMMARY OF THE INVENTION

The invention provides a method for preparing a supported activator component for subsequent contacting with a mono-cyclopentadienyl transition metal component comprising combining:
a) a cation that is capable of irreversibly reacting with at least one ligand contained in the inono-cyclopentadienyl transition metal component;
b) an anion that is a chemically stable, non-nucleophilic anionic complex having a molecular diameter about or greater than 4 angstroms, with
c) a catalyst support material selected from alumina, silica, alumna-silica, talc, magnesia, zirconia, titania, or mixtures thereof, preferably alumina, silica, or mixtures thereof substantially free of adsorbed surface hydroxyl groups.

The supported activator may be used in preparing a Supported catalyst for the polymerization of ∝-olefins, diolefins, strained cyclic olefins, and/or acetylenically unsaturated monomers alone in combination with other unsaturated monomers, which comprises contacting the supported activator with the mono-cyclopentadienyl transition metal component in an aliphatic solvent to produce a supported catalyst.

The catalysts are suitable for use in the polymerization of olefins, diolefins, cyclic olefins and acetylenically unsatured monomers. The heterogeneous catalyst permit the production of polyolefins of high weight average molecular weight (> 1 million) and narrow MWD at high catalytic activity rates. Moreover, the polyolefin products of the supported catalyst have a narrow CD and improved sequence distribution of comonomers as compared to the products made employing prior art conventional supported Ziegler-Natta catalysts.

The ability to produce a supported ionic catalyst was surprising since it would have been predicted that the reaction of ionic catalyst such as described in EPA 277003 and EPA 277004, with a Lewis base such as is present on a metal oxide surface would result in catalyst deactivation. It was believed that such support would: 1) decrease catalyst deactivation due to the residual hydroxyl groups on the surface; 2) bind too strongly to the catalyst through the surface oxide groups; and 3) alter the polymer characteristics.

The supported ionic transition metal catalyst of this invention preferably comprises an ionic transition metal catalyst and a suitable support material. The transition metal component of the ionic catalyst may be selected from a cyclopentadienyl (Cp) derative of a Group 4 (new IUPAC nomenclature based on Periodic Table of Elements as described in Chemical and Engineering News, 63 (5) 27, 1985) metal compound containing at least one ligand which will combine with an activator component or at least a portion thereof such as a cation portion thereof. The activator component is an ionic compound comprising a cation which will irreversibly react with at least one ligand contained in said Group 4 metal compound (transition metal component) and an anion which is a chemically stable, non-nucleophilic anionic complex. These can be single coordination complexes comprising a plurality of lipophilic radicals covalently coordinated to and shielding a central formally charge-bearing metal or metalloid atom or an anion which comprises a plurality of boron atoms such as polyhedral boranes, carboranes, and metallacarboranes. The anions are bulky, typically 4 angstroms or greater, labile and stable to any reaction involving the cation of the activator component. The anion may be any suitably substituted anion which is not hydrolyzed by aqueous solutions. Upon combination of the transition metal component, there is generated an ion pair consisting of a Group 4 metal cation with a formal coordination number of 3 or 4 and a valence of +4 and the aforementioned anion, which anion is compatible with and noncoordinating toward the metal cation formed from the transition metal component. The anion of the activator compound must be capable of stabilizing the metal cation complex without interfering with the ability of the metal cation or its decomposition product to function as a catalyst and must be sufficiently labile to permit displacement by an olefin, diolefin, cyclic olefin, or an acetylenically unsaturated monomer during polymerization. Likewise if 4 coordination sites of the metal cation are occupied, one must be a ligand sufficiently labile to permit displacement by an olefin, diolefin, cyclic olefin or an acetylenically unsaturated mononer.

The activator is contacted with a dried inorganic solid support material, which preferably has been treated with an aluminum alkyl solution before such contact, to subsequently form the supported ionic catalyst which is not deactivated by the Lewis base portions of the supported material. An ionic catalyst of enhanced productivity results when a suitable aluminum alkyl is employed as an additive during polymerization of the olefinic monomer(s). Greater particle size control can also be achieved by prepolymerizing the supported catalyst with olefinic monomer prior to use.

The supported catalyst of this invention will polymerize ethylene, α-olefins, diolefins, strained cyclic olefins and/or acetylenically unsaturated monomers either alone or in combination with other olefins and/or other unsaturated monomers in liquid, slurry or gas phase reaction.

The activator of step (ii) described above may be placed on a support material which has been treated as described and isolated as a supported activator component. The supported activator component may later be contacted with a transition metal component to form an active catalyst system.

### Detailed Description of the Preferred Embodiments

The present invention relates to supported mono-Cp catalysts eminently suited for use in various polymerization processes including gas or slurry phase polymerization of olefins. The catalysts preferably include a compound of the Group 4 transition metals, an ionic activator compound and a catalyst support. European Patent Applications EP 277,003, 277,004, PCT International Application WO 92/00333 describe the homogeneous variants of the Group 4 ionic catalysts which are prepared as the reaction product of a Group 4 metal compound and an ionic activator compound.

PCT WO 91/09882 describes supported bis-Cp transition metal components activated to catalysts with ionic activators. The present invention differs from that described in WO 91/09882 in that it provides a catalyst capable of producing polymer with low density and optional high molecular weight low density is achieved by the greater ability of these catalyst to incorporate propene and higher alpha-olefins. Because of this ability, larger alpha-olefins than typically used in the gas phase process can be used since the alpha-olefin vapor pressure can be sufficient to yield polymers with relatively low densities. High molecular weight can be obtained dues to the low rate of chain transfer even in the presence of alpha-olefins. In addition, the ionically activated mono-Cp catalyst has low hydrogen sensitivity and therefore allows one to use hydrogen to control molecular weight of polymers formed in a continous or batch gas phase reactor.

This invention also differs from 91/09882 in that the mono-Cp moieties allow for more pronounced comononer incorporation and molecular weights in the polymer formed. Since mono-Cp moieties are more open, i.e., less sterically constrained, than bis-Cp compounds, one would expect the mono-Cp compounds to be more easily deactivated by polar units on the support surface than the bis-Cp compounds. Surprisingly, it has been discovered that mono-Cp compounds can be placed on a support with an ionic activator and maintain catalytic abilities.

### Ionic Catalyst System - General Description

The ionic catalysts prepared by the methods of this invention can be represented by the following general formulae: 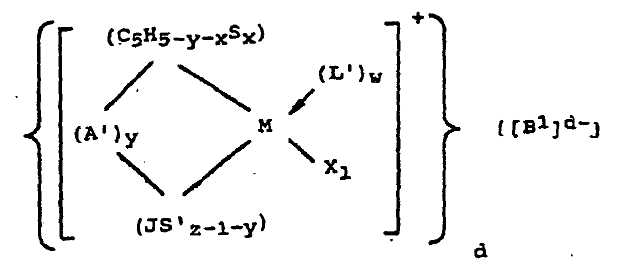 wherein:
A' is a bridging group containing a Group 14 element;
(C₅H_{5-y-x}Sₓ) is a Cp ring substituted with from zero to five S radicals, each substituent group S being, independently, a radical group which is a hydrocarbyl, substituted-hydrocarbyl, halocarbyl, substituted-halocarbyt, hydrocarbyl-substituted organometalloid, halocarbyl-substituted organametalloid, hydrocarbyl-substituted boron, hydrocarbyl-substituted pnictogen, hydrocarbyl-substituted chalcogen or halogen or two adjacent S groups are joined forming a C₄ to C₂₀ ring to give a saturated or unsaturated polycyclic Cp ligand;
x is from 0 to 5 denoting the degree of substitution;
M is a Group 4 transition metal;
L' is a neutral Lewis base;
X₁ is a hydride radical, hydrocarbyl radical, substituted-hydrocarbyl radical, hydrocarbyl-substituted organometalloid radical or halocarbyl-substituted organometalloid radical which radical may optionally be covalently bonded to both or either M and L' or all and any M, S, and S' and X₁ is not a Cp ring as defined above;
(JS'_{z-1-y}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; and z is the coordination number of the element J;
y is 0 or 1;
w is an integer from 0 to 1;
B' is a chemically stable, non-nucleophilic anionic complex having a molecular diameter about or greater than 4 angstroms; and
d is an integer representing the charge of B'.

The improved polymerization catalysts are preferably prepared by combining at least two components. The first component is a Cp derivative of a Group 4 metal compound containing at least one ligand which will combine with the second component or at least a portion thereof such as a cation portion thereof. The second component is the ion-exchange compound comprising a cation which will irreversibly react with at least one ligand contained in said metal compound (first component) and a non-coordinating anion which is either a single coordination complex comprising a plurality of lipophilic radicals covalently coordinated to and shielding a central formally charge-bearing metal or metalloid atom or an anion comprising a plurality of boron atoms such as polyhedral boranes, carboranes and metallacarboranes.

The cation portion of the second component may comprise Bronsted acids such as protons, or protonated Lewis bases, or may comprise reducible Lewis acids such as ferricinum, tropylium, triphenylcarbenium or silver cations

In general, suitable anions for the second component may be any stable and bulky anionic complex having the following molecular attributes: 1) the anion should have a molecular diameter greater than 4 angstroms; 2) the anion should form stable ammonium salts; 3) the negative charge on the anion should be delocalized over the framework of the anion or be localized within the core of the anion; 4) the anion should be a relatively poor nucleophile; and 5) the anion should not be a powerful reducing or oxidizing agent. Anions meeting these criteria - such as polynuclear boranes, carboranes, metallacarboranes, polyoxoanions and anionic coordination complexes are well described in the literature. Upon combination of the first and second components, the cation of the second component reacts with one of the ligands of the first component, thereby generating an anion pair consisting of a metal cation and the aforementioned anion, which anion is compatible with and noncoordinating towards the metal cation and the aforementioned anion, which anion is compatible with and noncoordinating towards the metal cation formed from the first component. The anion of the second compound must be capable of stabilizing the metal cation without interfering with the metal cation's ability to function as a catalyst and must be sufficiently labile to permit displacement by an olefin, diolefin, cyclic olefin, or an acetylenically unsaturated monomer during polymerization.

### A. The Transition Metal Component

The Group 4 metal compounds, useful as first compounds in the preparation of the improved polymerization catalyst of this invention are η⁵-cyclopentadienyl transition metal compounds of Group 4 transition metals. In general, useful transition metal compounds may be represented by the following general formulae: 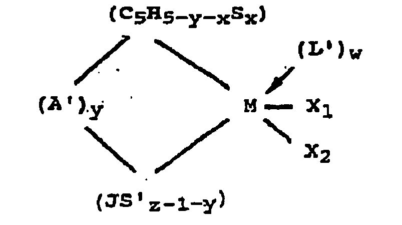 wherein:
L' is a neutral Lewis base;
X₁ is, independently, hydride radicals, hydrocarbyl radicals, substituted hydrocarbyl radicals, halocarbyl radicals, substituted halocarbyl radicals, and hydrocarbyl- and halocarbyl-substituted organometalloid radicals or X₁ may optionally be covalently bonded to M and L' or all and any M, S, and S'; or two X'₁ are joined and bound to the metal atom to form a metallacycle ring containing from about 3 to about 20 carbon atoms provided that X₁ is not a Cp ring as previously defined.

Examples of bridging groups A' include but are not limited to R₂C, R₂Si, R₂Ge, R₂CR₂C, R₂SiR₂Si, R₂GeR₂Ge, R₂CR₂Si, R₂CR₂Ge R₂CR₂CR₂C, R₂SiOR₂Si diradicals where R is independently selected from the group containing hydride, halogen radicals, and C₁₋₂₀ hydrocarbyl radicals. Preferably, A' has a bridge length of two atoms or less as in methylene, ethylene, diphenylsilyl, dimethylsilyl, methylphenylsilyl.

Examples of substituent groups S include but are not limited to C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, napthyl, butylphenyl, butyldimethylphenyl; C₁₋₂₀ substituted hydrocarbyl radicals including benzyl, N,N-dimethylaminobenzyl, N,N-dimethylaminomethyl, methoxymethyl, diphenylphosphinomethyl, fluorophenyl, trifluoromethylphenyl, fluoromethyl, cyanoethyl; C₁₋₂₀ linear and branched halocarbyl radicals including trifluoromethyl, perfluoroethyl, perfluoropropyl, perfluorobutyl, perfluorophenyl, chlorodifluoromethyl, chlorotetrafluorophenyl, bromotetrafluorophenyl, iodotetrafluorophenyl; C₁₋₂₀ substituted-halocarbyl radicals such as methyltetrafluorophenyl, N,N-dimethyldifluoromethyl, methoxyperflouroethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl; C₁₋₂₀ hydrocarbyl-substituted boron radicals including dimethylboranyl, diphenylboranyl; C₁₋₂₀ hydrocarbyl-substituted pnictogen radicals including N,N-dimethylamino, diphenylamino, diphenylphosphino, dimethylphosphino; C₁₋₂₀ hydrocarbyl-substituted chalcogen radicals including methoxy, ethoxy, butoxy, phenoxy, methylthio, ethylthio, phenylthio, and halogen radicals including fluoro, chloro, bromo, and iodo.

Examples of neutral Lewis base ligands (L') include but are not limited to diethylether, dimethylether, N,N-dimethylanaline, trimethylamine, triphenylamine, triethylamine, triphenylphosphine, trimethylphosphine, thiophene, dimethylsulfide, benzyne, ethylene, propylene, butene, 1,4-hexadiene, acetylene.

X₁ is independently a univalent anionic ligand including but not limited to hydride, C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclodocecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, butylphenyl, butyldimethylphenyl; C₁₋₂₀ substituted hydrocarbyl radicals including benzyl, N,N-dimethylaminobenzyl, N,N-dimethylaminomethyl, methoxyhexyl, diphenylphosphinodecyl, fluorophenyl, trifluoromethylphenyl, fluoromethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl. Optionally two X₁ may form a metallocycle with the metal such as methylidene, ethylidene or propylidene. In all cases, X₁ (or both X₁ together) is not a Cp ring as defined by (C₅H_{5-y-x}Sₓ).

Examples of S' include but are not limited to C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, napthyl, butylphenyl, butyldimethylphenyl; C₁₋₂₀ substituted hydrocarbyl radicals including benzyl, N,N-dimethylaminobenzyl, N,N-dimethylaminomethyl, methoxymethyl, diphenylphosphinomethyl, fluorophenyl, trifluoromethylphenyl, fluoromethyl, cyanoethyl; C₁₋₂₀ linear and branched halocarbyl radicals including trifluormethyl, perfluoroethyl, perfluoropropyl,perfluorobutyl, perfluorophenyl, chlorodifluoromethyl,chlorotetrafluorophenyl, bromotetrafluorophenyl, iodotetrafluorophenyl; C₁₋₂₀ substituted-halocarbyl radicals such as methyltetrafluorophenyl, N,N-dimethyldifluoromethyl, methoxyperflouoroethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl.

Table 1 depicts representative constituent moieties for the transition metal component. Examples 1 and 2 demonstrate polymerization of ethylene monomers employing a mono-Cp ionic catalyst system.

### B. The Activator Component

Compounds useful as an activator component a) and b) in the preparation of the ionic catalyst systems comprise a cation, which may be a Bronsted acid capable of donating a proton, and a compatible non-coordinating anion which anion is relatively large (bulky), capable of stabilizing the active catalyst species (the Group 4, 5 or 6 cation) which is formed when the two compounds are combined and said anion will be sufficiently labile to be displaced by olefinic, diolefinic, and acetylenically unsaturated substrates or other neutral Lewis bases such as ethers, nitriles and the like. Two classes of compatible non-coordinating anions have been disclosed in EPA 277003 and EPA 277004: 1) anionic coordination complexes comprising a plurality of lipophilic radicals covalently coordinated to and shielding a central charge-bearing metal or metalloid core, and 2) anions comprising a plurality of boron atoms such as carboranes, metallacarboranes and boranes.

In general, the activator compounds containing single anionic coordination complexes which are useful in this invention may be represented by the following general formula:

[(L'-H)+]^{c}[(M')^{m+}Q₁Q₂...Qₙ]^{d-}

wherein: -
H is a hydrogen atom;
[L'-H] is a Bronsted acid;
M' is a metal or metalloid;
Q₁ to Qₙ are, independently, hydride radicals, bridged or unbridged dialkylamido radicals, alkoxide and aryloxide radicals, substituted-hydrocarbyl radicals, halocarbyl and substituted-halocarbyl radicals and hydrocarbyl- and halocarbyl-substituted organometalloid radicals and any one, but not more than one, Q₁ to Qₙ may be a halide radical;
m is an integer representing the formal valence charge of M'; and
n is the total number of Q ligands.

As indicated above, any metal or metalloid capable of forming an anionic complex which is stable in water may be used or contained in the anion of the second compound. Suitable metals, then, include, but are not limited to, aluminum, gold, or platinum. Suitable metalloids include, but are not limited to, boron, phosphorus or, silicon. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

The preferred activator compounds comprising boron may be represented by the following general formula:

[L'-H]+[BAr₁Ar₂X₃X₄]-

wherein:
B is boron in a valence state of 3;
Ar₁ and Ar₂ are the same or different substituted-aromatic hydrocarbon radicals containing from about 6 to about 20 carbon atoms and may be linked to each other through a stable bridging group; and
X₃ and X₄ are, independently, hydride radicals, hydrocarbyl and substituted-hydrocarbyl radicals, hydrocarbyl- and halocarbyl-substituted organometalloid radicals, disubstituted pnictogen radicals, substituted chalcogen radicals and halide radicals, with the proviso that X₃ and X₄ will not be halide at the same time.

In general, Ar₁ and Ar₂ may, independently, be any substituted-aromatic hydrocarbyl radical. Suitable aromatic radicals include, but are not limited to, naphthyl and anthracenyl radicals. Suitable substituents on the substituted-aromatic hydrocarbyl radicals, include, but are not necessarily limited to, hydrocarbyl radicals, organometalloid radicals, alkoxy and aryloxy radicals, alkylamido radicals, fluorocarbyl and fluorohydrocarbyl radicals and the like such as those useful as X₃ and X₄. The substituent may be ortho, meta or para, relative to the carbon atoms bonded to the boron atom. When either or both X₃ and X₄ are a hydrocarbyl radicals, each may be the same or a different substituted-aromatic radical as are Ar₁ and Ar₂, or the same may be a straight or branched alkyl, alkenyl or alkynyl radical, a cyclic hydrocarbon radical or an alkyl-substituted cyclic hydrocarbon radical. X₃ and X₄ may also, independently be alkoxy or dialkylamido radicals wherein the alkyl portion of said alkoxy and dialkylamido radicals are hydrocarbyl radicals, organometalloid radicals and the like. As indicated above, Ar₁ and Ar₂ could be linked to either X₃ or X₄. Finally, X₃ and X₄ may also be linked to each other through a suitable bridging group.

Examples of boron compounds which may be used as an activator component in the preparation of the improved catalysts of this invention are trialkyl-substituted ammonium salts such as trimethylammonium tetra(p-toly)boron, trimethylammonium tetra(o-toly)boron, tributylammonium tetrakis(pentafluorophenyl)borate, tripropylammonium tetra(o,p-dimethylphenyl)boron, tributylammonium tetra(m,m-dimethylphenyl)boron, tributylammoniumtetra(p-tri-fluoromethylphenyl)boron, tri(n-butyl)ammonium tetra(o-toly)boron: dialkyl ammonium salts such as di(i-propyl)ammonium tetrakis(pentafluorophenyl)borate,

Similar lists of suitable compounds containing other metals and metalloids which are useful as activator components may be made, but such lists are not deemed necessary to a complete disclosure. In this regard, it should be noted that the foregoing list is not intended to be exhaustive and that other useful boron compounds as well as useful compounds containing other metals or metalloids would be readily apparent to those skilled in the art from the foregoing general equations.

The most preferred activator compounds comprising boron may be represented by the following general formula:

[L'-H]⁺[B(C₆F₅)₃Q]⁻

wherein:
F is fluorine, C is carbon and B is boron, L' and Q are as defined above. Illustrative but not limited, examples of most preferred activator compounds comprising boron which may be used in the preparation of the improved catalysts of this invention include N,N-dialkylanilinium salts (L'= N,N-dialkylaniline) where Q is a simple hydrocarbyl such as methyl, butyl, cyclohexyl, or substituted phenyl or where Q is a polymeric hydrocarbyl of indefinite chain length such as polystyrene, polyisoprene, or poly-paramethylstyrene. Polymeric Q substituents on the most preferred anion offer the advantage of providing a highly soluble ion-exchange activator component and final ionic catalyst. Soluble catalysts and/or precursors are often preferred over insoluble waxes, oils, phases, or solids because they can be diluted to a desired concentration and can be transferred easily using simple equipment in commercial processes.

Activator components based on anions which contain a plurality of boron atoms may be represented by the following general formulae:

[L'-H]^{c}[(CX)ₐ(BX')ₘX"_{b}]^{c-} or

[L'-H]^{d'}[[[(CX₆)_{a'}(BX₇)_{m'}(X₈)_{b}']^{c'}-]2M"^{n'}+]_{d'}-

wherein:
[L'H] is either H+ or a Bronsted acid derived from the protonation of a neutral Lewis base;
X, X', X", X₆, X₇ and X₈ are, independently, hydride radicals, halide radicals, hydrocarbyl radicals, subsituted-hydrocarbyl radicals, hydrocarbyl- or halocarbyl- substituted organometalloid radicals;
M" is a transition metal;
a and b are integers ≥ 0; c is an integer ≥ 1; a + b + c = an even-numbered integer from 2 to about 8; and m is an integer rangin from 5 to about 22;
a' and b' are the same or different integer 0; c' is an integer ≥ 2; a' + b' + c' = an even-numbered integer from 4 to about 8; m' is an integer from 6 to about 12; n' is an integer such that 2c' - n' = d'; and d' is an integer ≥ 1.

Preferred anions of this invention comprising a plurality of boron atoms comprise:
(1) A trisubstituted ammonium salt of a borane or carborane anion satisfying the general formula:

   [(CH)ₐₓ(BH)_{bx}]^{cx-}

   wherein:
   ax is either 0 or 1; cx is either 1 or 2; ax + cx = 2; and bx is an integer ranging from about 10 to 12;
(2) A trisubstituted ammonium salt of a borane or carborane or a neutral borane or carborane compound satisfying the general formula:

   [(CH)_{ay}(BH)_{my}(H)_{by}]^{cy-}

   wherein:
   ay is an integer from 0 to 2; by is an integer from 0 to 3; cy is an integer from 0 to 3; ay + by + cy = 4; and my is an integer from about 9 to about 18; or
(3) A trisubstituted ammonium salt of a metallaborane or metallacarborane anion satisfying the following general formula:

   [[[(CH)_{az}(BH)_{mz}(H)_{bz}]^{cz-}]₂M"^{nz+}]^{dz-}

   wherein:
   az is an integer from 0 to 2; bz is an integer from 0 to 2; cz is either 2 or 3; mz is an integer from about 9 to 11; az + bz + cz = 4; and nz and dz are respectively, 2 and 2 or 3 and 1.

Illustrative, but not limited, examples of second components which can be used in preparing catalyst systems utilized in the process of this invention wherein the anion of the second component contains a plurality of boron atoms are mono-, di-, trialkylammonium and phosphonium and dialkylarylammonium and -phosphonium salts such as bis[tri(n-butyl)ammonium]dodecaborate, bis[tri(n-butyl)animonium]decachlorodecaborate,tri(n-butyl)ammonium dodecachlorododecaborate, tri(n-butyl)ammonium 1-carbadecaborate, tri(n-butyl)ammonium 1-carbaundecaborate, tri(n-butyl)ammonium 1-carbadecaborate, tri(n-butyl)anunonium dibromo-1-carbadodecaborate; borane and carborane complexes and salts of borane and carborane anions such as decaborane (14), 7,8-dicarbaundecaborane (13), 2,7-dicarbaundecaborane (13), undecahydrideo-7,8-dimethyl-7, 8-dicarbaundecaborane, tri(n-butyl)ammonium 6-carbadecaborate (12), tri(n-butyl)ammonium 7-carbaundecaborate, tri(n-butyl)ammonium 7,8-dicarbaundecaborate and metallaborane anions such as tri(n-butyl)ammonium bis(nonahydride-1,3-dicarbanonaborato) cobaltate (III), tri(n-butyl)ammonium bis(undecahydride-7,8-dicarbaundecaborato) ferrate (III), tri(n-butyl)ammonium bis(undecahydride-7,8-dicarbaundecaborato) cobaltate (III), tri(n-butyl)ammonium bis(undecahydride-7,8-dicarbaundecaborato)nickelate (III), tri(n-butyl)ammonium bis(nonahydride-7,8-dimethyl-7,8-dicarbaundecaborato)ferrate (III), tri(n-butyl)ammonium bis(tribromooctahydride-7,8-dicarbaundecaborato)cobaltate (III), tri(n-butyl)ammonium bis(undecahydridodicarbadodecaborato) cobaltate (III) and bis[tri(n-butyl)ammonium] bis(undecahydride-7-carbaundecaborato)cobaltate (III). A similar list of representative phosphonium compounds can be recited as illustrative second compounds, but for the sake of brevity, it is simply noted that the phosphonium and substituted-phosphorium salts corresponding to the listed ammonium and substituted-ammonium salts could be used as second compounds in the present invention.

### A Choice of Transition Metal-Activator Pairs

In general, while most transition metal components identified above may be combined with most activator components identifed above to produce an active olefin polymerization catalyst, it is desirable for continuity of the polymerization operations that either the metal cation initially formed form the transition metal component or a decomposition product thereof be a relatively stable catalyst. It is also desirable that the anion of the activator compound be stable to hydrolysis when an ammonium salt is used. Further, it is desirable that the acidity of the activator component be sufficient, relative to the transition metal component to facilitate the needed proton transfer. In general, Cp metal compounds which can be hydrolyzed by aqueous solutions are considered suitable as components to form the catalysts described herein.

With respect to the combination of the transition metal component with the activator component to form a catalyst of this invention, it should be noted that the two compounds combined for prepartion of the active catalyst must be selected to avoid transfer of a fragment of the anion, particularly an aryl group, to the metal cation, thereby forming a catalytically inactive species. This can be done by steric hindrance, resulting from substitutions on the Cp carbon atoms as well as substitutions on the aromatic carbon atoms of the anion. It is followed, then, that the transition metal components comprising perhydrocarbyl-substituted Cp radicals could be effectively used with a broader range of activator compounds than could transition metal components comprising unsubstituted Cp radicals. As the amount and size of the substitutions on the Cp radicals are reduced however, more effective catalysts are obtained with activator compounds containing anions which are more resistant to degradation, such as those with substituents on the ortho positions of the phenyl rings. Another means of rendering the anion more resistant to degradation is afforded by fluorine substitution, especially perfluorosubstitution, in the anion. Fluoro-substituted stabilizing anions may, then, be used with broader range of metal compound (first components). Activators in which the anions comprise pentafluorophenyl groups are preferred for preparing ion-pair transition metal catalysts of this invention. It is preferred that the mole ratio of transition metal component to activator component be 1:1 or greater.

While generally an activator will be combined with a transition metal compound and be placed on a support, it is possible to place the activator, alone, on a support media. A transition metal compound may be combined with the supported activator at a later point when the catalyst system is to be employed.

### The Catalyst Support

Typically, the support can be any of the known solid catalyst supports, particularly porous supports, such as talc, inorganic oxides. Preferably, the support material is an inorganic oxide.in particulate form.

Suitable inorganic oxide materials which are desirably employed in accordance with this invention include Group 2, 3, 4, 13, or 14 metal oxides. The most preferred catalyst support materials include silica, alumina, and silica-alumina, and mixtures thereof. Other inorganic oxides that may be employed either alone or in combination with the silica, alumina or silica-alumina are magnesia, titania, zirconia.

The specific particle size, surface area and pore volume of the inorganic oxide determine the amount of oxide that is desirable to employ in preparing the catalyst compositions, as well as affecting the properties of the polymer formed. These properties must frequently be taken into consideration in choosing an inorganic oxide for use in a particular aspect of the invention. In general, optimum results are usually obtained by the use of inorganic oxides having an average particle size in the range of 0.1 to 600 microns, Preferably 0.3 to 80 microns; a surface area of 50 to 1,000 square meters per gram, preferably 100 to 400 square meters per gram; and a pore volume of 0.5 to 3.5 ml per gram; preferably 0.5 to 2 ml per gram.

The inorganic oxide support used in the preparation of the catalyst may be any particulate oxide or mixed oxide such that it is substantially free of adsorbed moisture or surface hydroxyl groups. If a support is employed that contains surface hydroxyl groups, a drying or dehydration treatment must be employed. Timing for the dehydration of the support is not critical; i.e., dehydration may occur immediately before use of the support or days before provided once the support is dehydrated, it is protected from moisture and impurities. Thermal treatment to dehydrate the support may be carried out in vacuum or while purging with a dry inert gas such as nitrogen at a temperature of 100°C to 1000°C, and preferably, above 300°C to 900°C, or more preferably 500°C to 850°C. Pressure considerations are not critical. The duration of the thermal treatment can be from 1 to 24 hours.

Chemical dehydration or chemical treatment to dehydrate the support may be accomplished by slurring the inorganic particulate material, such as, for example, silica in an inert low boiling hydrocarbon, such as, for example, hexane. During the chemical dehydration reaction, the support, preferably silica, should be maintained in a moisture and oxygen-free atmosphere. To the silica slurry is then added a low boiling inert hydrocarbon solution of the chemical dehydrating agent. Useful chemical agents are for example, chlorosilanes, such as trimethylchlorosilane and alkyl metal compounds such as dibutylmagnesium, diethylzinc, trimethylaluminum, triethylaluminum, trimethylaluminum and triethylaluminum being particularly preferred. The ratio of millimoles of metal alkyl per gram of support may be between 0.1 to 100, a ratio of 1 to 10 being preferred. The chemical dehydration may be carried out at temperatures of -100°C to 300°C (preferably 0°C to 100°C) and contact times can range from 1 minute to 48 hours, preferably 15 minutes to 2 hours. The treated silica is filtered off and washed with a light aliphatic hydrocarbon (pentanes or hexanes) before drying in vacuo or in a dry stream of inert gas. Since even small amounts of alkyl metal can have an adverse effect on catalyst reactivity to comonomers, the support is washed several times with an inert hydrocarbon solvent to remove both excess dehydration agent and its dehydration reaction products.

To achieve a more active catalyst system the dried support material is subsequently stirred in a hydrocarbon solution of a hydrolyzable organoadditive, preferably a Group 13 alkyl compound such as an alkyl aluminum, such as triethylaluminum (TEAL), preferably 3 mmol or less of IM hexane solution per gram of support isolated, and washed with a hydrocarbon solvent, such as pentane, to remove unreacted alkyl aluminum. The catalyst system is placed on the support after the treatment with an alkyl aluminum solution.

Producing the supported ionic catalyst was surprising since it would have been expected that the reaction of the ionic catalyst with a Lewis base, as present on the oxide surface, would result in catalyst deactivation. The metal oxides generally contain surface hydroxyl groups which typically react with and deactivate the ionic transition metal catalyst. As such it was found that failure to employ a sufficiently dehydrated or dried oxide support would cause catalyst activity to be either greatly diminished or totally absent. Therefore, to achieve a catalytically active system, the inorganic oxide support must be substantially free of adsorbed hydroxyl groups on its surface.

Generally, hydrogen is employed during polymerizations to control MW of a resulting polymer. Certain catalysts in a gas phase reactor have been found to produce hydrogen which must then be released from the reactor. Mono-Cp, ionically activated catalysts offer the potential to use hydrogen as a source of MW control. Mono-Cp ionically activated catalysts generally produce homo- or copolymers having a MW from 2x10⁵ to 2x10⁶ or greater, optionally having a density range of 0.88-0.97, preferably 0.885-0.960.

### Catalyst Preparation and Use

The supported ionic transition metal catalyst of this invention may be prepared by combining the transition metal component, the activator component and the support in suitable solvents in steps.

### A. Catalyst Preparation

The supported catalyst of this invention can be prepared by combining the transition metal, activator components and support in one or more suitable solvents or diluent. Suitable solvents and/or diluents include, but are not necessarily limited to, straight and branched-chain hydrocarbons such as isobutane, butane, pentane, hexane, heptane, octane; cyclic and alicyclic hydrocarbons such as cyclohexane, cycloheptane, methylcyclohexane, methylcycloheptane; and aromatic and alkyl-substituted aromatic compounds such as benzene, toluene, xylene.

It is preferred that the catalyst components be handled in an inert, moisture-free, oxygen-free environment such as argon, nitrogen or helium because of the sensitivity of the catalyst components to moisture and oxygen.

The activator component is dissolved in an aromatic solvent with the support, which has been treated as described above, to produce the supported activator component. This reaction is carried out at a temperature sufficient to produce a homogeneous solution of the activator component, preferably between 25°C to 200°C. The aromatic solvent is then removed to leave a free-flowing supported material. The supported material is subsequently contacted with the transition metal component, preferably in an aliphatic solvent to produce the supported catalyst.

The active supported catalyst can be recovered by removal of the solvent to obtain a free-flowing solid or alternatively, the active supported catalyst can be maintained in a slurry state for direct use.

Contact temperatures may range from 0° to 100°C depending upon the solvents used. Contact times may vary from 10 seconds to 60 minutes.

In the preparation of the supported catalyst, the reagents should be combined to provide a catalyst concentration (transition metal and activator) on the support of from 0.01 wt % to 20 wt %, preferably 1 wt % to 5 wt % based upon the weight of the support.

In a first step, N,N-dimethylanilinium tetrakis(pentafluorophenyl)boron is dissolved in an aromatic solvent maintained at a temperature sufficient to dissolve the activator component. The support, thermally and/or chemically dehydrated as above, is slurried therein and the activator and support are reacted for 1 minute to 1 hour to produce a supported activator component. The aromatic solvent is removed to leave a free-flowing support material containing the activator component. This supported activator component is then contacted with the transition metal component, preferably in an aliphatic solvent to produce the supported catalyst.

The active supported catalyst can be recovered by removal of the solvent to obtain a free-flowing solid or, alternately, the active supported catalyst can be maintained in a slurry state for direct use.

A particularly surprising feature of the present invention is that the supported catalyst systems retain most of their catalytic activity over much longer periods of time than their unsupported variants.

The supported catalyst may optionally be prepolymerized with an olefinic monomer in order to achieve improved particle strength and size and reduced reactor fouling during polymerization.

### B. Catalyst Use

The supported ionic catalyst may be used to polymerize α-olefins, diolefins, strained cyclic olefins, and/or acetylenically unsaturated monomers alone in combination with other unsaturated monomers. While the catalyst is active for this broad range of olefinic monomer feedstock, α-olefins polymerization is preferred, especially the homopolymerization of ethylene or the copolymerization of ethylene with olefins having 3 to 10 carbon atoms.

Gas or slurry polymerizations using the inventive supported catalysts may be conducted generally at a temperature in the range of 0° to 160°C or even higher, and under atmospheric, subatmospheric or superatmospheric pressure conditions.

A slurry polymerization process can utilize sub- or super-atmospheric pressures and temperatures in the range of -80° to 250°C. In a slurry polymerization, a suspension of solid, particulate polymer is formed in a liquid polymerization medium to which ethylene, α-olefin, diolefin, cyclic olefin or acetylenically unsaturated comonomer, hydrogen and catalyst are needed. Alkanes and cycloalkanes, such as butane, pentane, hexane, or cyclohexane, are preferred with C₄ to C₁₀ alkanes especially preferred. Preferred solvents also include liquid olefins which may act as monomers or comonomers including ethylene, propylene, butadiene, cyclopentene, 1-hexene, 3-methyl-l-pentene, 4-methyl-1-pentene, 1,4-hexadiene, 1-octene, and 1-decene.

A gas-phase polymerization process utilizes superatmospheric pressure and temperatures in the range of 50° to 120°C. Gas-phase polymerization can be performed in a stirred or fluidized bed of catalyst and product particles in a pressure vessel adapted to permit the separation of product particles from unreacted gases. Thermostated ethylene, comonomer, hydrogen and an inert diluent gas such as nitrogen can be introduced or recirculated so as to maintain the particles at a temperature of 50° to 120°C. Polymer product can be withdrawn continuously or semi-continuously at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal. The polymer obtained can be extruded into water and cut into pellets or other suitable comminuted shapes. Pigments, antioxidants, and other additives, as is known in the art, may be added to the polymer.

In a preferred embodiment of the present invention, the transition metal component will be a substituted or unsubstitued mono-Cp metal heteratom containing compound with one or two lower alkyl substituents and/or one or two hydride substituents. The activator component will be a tri-substituted ammonium salt of a fluorinated tetraphenylboron anion or a triphenyl boron anion. Each of the tri-substitutions in the ammonium cation will be the same or a different lower alkyl or aryl radical. By lower alkyl it is meant an alkyl radical containing from 1 to 4 carbon atoms. N,N-dimethylanilinium tetrakis(pentafluorophenyl)borate is particularly preferred.

The catalysts of this invention, in the absence of a chain transfer agent, can lead to the production of extremely high molecular weight polymers, low melt index, and copolymers having relatively narrow molecular weight distributions. In this regard, it should be noted that homopolymers and copolymers having molecular weights from 2x10⁵ up to 2x10⁶ or higher and molecular weight distributions within the range of 1.5 to 3 can be produced. Employing these catalysts at lower polymerizing temperatures will usually produce polymers of higher molecular weight. However polymerization temperatures of 60°C or greater can produce polyethylene of MW greater than 2 x 10⁵. Example 1 illustrates use of catalyst to yield polymer having a molecular weight greater than 1 million. In addition, if lower or moderate molecular weights are desired, molecular weight can be controlled with the use of a chain transfer agent such as hydrogen.

Polymers formed employing the supported catalyst described herein, either alone or with an organometallic additive have been found to exhibit high strength useful in fibers; fibers which can be spun or gel bond. Generally, the higher molecular weight polymers produce the properties most desirable for fiber usage.

Combinations of two or more ionic transition metal catalyst with the support can be employed in order to obtain broader MWD such as up to 15 or greater. Alternatively, two or more separately supported catalysts can be used to obtain broad MWD polymers and copolymers.

Transition metal compound precursors providing tacticity control for the stereospecific polymerization of prochiral olefins, propylene, or higher alpha-olefins, exist when A' acts to restrict rotation of Cp ring and/or the Cp ring is of sufficient bulk to restrict rotation such that the appropriate symmetry conditions are satisfied.

Preferable prochiral transition metal compounds for the production of isotactic polymers are those where A' is a bridging group and the substituents on Cp are chosen such that 1) the steric difference between Cp and the heteroatom is maximized and 2) the absence of a plane of symmetry through the metal center and the carbon atoms on the Cp and heteroatom which are bonded to A'. For the production of syndiotactic polymers the second condition requires the presence of a plane of symmetry through the metal center and the carbon atoms on the Cp and heteroatom which are bonded to A'. The supported catalysts may be most usefully employed in gas or slurry phase processes, both of which are known to those of skill in the art.

US 5,153,157 discloses use of a organo additive to enhance production of an unsupported bis-Cp component ionic catalyst system during polymerization. It has been found that the use of an additive or scavenger with the supported ionic catalyst enhances productivity thereof.

The advantages of the instant invention will be more readily appreciated by reference to the following illustrative, non-limiting examples.

### Example 1 - Teal-Treated Silica - Polyethylene Polymerization

To 5.0 g of Davison 948 silica slurried in pentane, 15 ml of 1.5 M teal was added, and the slurry was stirred for 30 minutes. The silica was then washed eight times with pentane to remove any free aluminum alkyl and then dried in vacuo.

To 1.0 g of teal-treated silica slurried in toluene, 24 mg of [DMAH][B(pfp)₄] and 15 mg of Me₂Si(Me₄C₅)(NC₁₂H₂₃)TiMe₂ dissolved in 15 ml of toluene was added dropwise. After addition, the solvent was removed in vacuo and isolated.

400 ml of hexane, 1.0 g of the supported catalyst, and 200 psi of ethylene were added to the reactor at 60°C and allowed to react for 30 minutes. Polyethylene (20.0 g) was recovered. The molecular weight of this polyethylene could not be determined by gpc since the polymer was not soluble in orthodichlorobenzene at 170°C thus indicating a molecular weight greater than 1 to 2 million. The polymer density was measured at 0.934 g/cc. DSC data gave a second melt at 137°C, a final melting point at 140°C, and a calculated crystallinity of 31%

### Example 2 - Teal-Treated Silica, Polyethylene Polymerization

Silica (Davison 948, dried at 800°C, 100 g) was slurried in pentane (1 1). Triethylaluminum (200 ml of 1.5 M solution in heptane) was added over 30 minutes and the slurry stirred an additional 45 minutes. The solids were filtered off, washed 10 times with pentane and dried. A sample (5 g) was slurried in toluene (30 ml). A solution of N,N-dimethylanilinium tetrakis(pentafluorphenyl)boron (162 mg) in warm toluene (100 ml) was added slowly. The solvent was evaporated in vacuo.

A sample of the support thus treated (500 mg) was slurried in pentane and dimethylsilyl(tetramethylcyclopentadienyl)(t-butylamdo)zirconium dimethyl (8 mg) in pentane solution added. The solvent was evaporated in vacuo to afford the supported catalyst.

The supported catalyst (420 mg) was transferred, under nitrogen, to a 1 liter stainless-steel autoclave which had previously been flushed with nitrogen and which contained 400 ml of dry, deoxygenated hexane. The autoclave was pressured to 100 psi with ethylene and stirred at 60°C. After 10 minutes, the autoclave was cooled, vented, and the contents separated by filtration. The yield of polyethylene was 11.0 g.

Although the invention has been described with reference to its preferred embodiments, those of ordinary skill in the art, upon reading this disclosure, will appreciate changes and modifications which do not depart from the scope and spirit of the invention as described above or claimed hereafter.

**TABLE 1**

| A' | (C₅H_{5-y-x}Sₓ) | (JS'_{z}) | x₁ | H |
|---|---|---|---|---|
| dimethylsilyl | cyclopentadienyl | t-butylamido | hydride | zirconium |
| diethylsilyl | methylcyclopentadienyl | phenylamido | methyl | hafnium |
| di-n-propylsilyl | 1,2-dimethylcyclopentadienyl | p-n-butylphenylamido | ethyl | titanium |
| di-isopropylsilyl | 1,3-dimethylcyclopentadienyl | cyclohexylamido | phenyl | |
| di-n-butylsilyl | indenyl | perflurophenylamido | n-propyl | |
| di-t-butylsilyl | 1,2-diethylcyclopentadienyl | n-butylamido, | isopropyl | |
| di-n-hexylsilyl | tetramethylcyclopentadienyl | methylamido | n-butyl | L' |
| methylphenylsilyl | ethylcyclopentadienyl | ethylamido | amyl | ethylene |
| ethylmethylsilyl | n-butylcyclopentadienyl | n-propylamido | isoamyl | propylene |
| diphenylsilyl | cyclohexymethylcyclopentadienyl | isopropylamido | hexyl | 1-butene |
| di(p-t-butylphenothylsilyl) | n-octylcyclopentadlenyl | benzylamido | isobutyl | 1,4-hexadiene |
| n-hexylmethylsilyl | beta-phenylpropylcyclopentadienyl | cyclododecylamido | heptyl | 1,3-butadiene |
| cyclopentamethylenesilyl | tetrahydroindenyl | o-butylamido | octyl | 1,3-hexadiene |
| cyclotetramethylenesilyl | propylcyclopentadienyl | t-butylphosphido | nonyl | acetylene |
| cyclotrimethylenesilyl | t-butylcyclopentadienyl | ethylphosphido | decyl | methylacetylene |
| dimethylgermanyl | benzylcyclopentadienyl | phenylphosphido | cetyl | ethylacentylene |
| diethylgermanyl | diphenylmethylcyclopentadienyl | cyclohexylphosphido | methylidene (both x) | benzyne |
| phenylamido | trimethylatannycyclopentadienyl | oxo | ethylidene (both x) | diethylether |
| t-butylamido | trimethylplumbylcyclopentadienyl | sulfido | propylidene (both x) | dimethylether |
| methylamido | triethylplumbylcyclopentadienyl | | | trimethyamine |
| t-butylphosphido | trifluromethylcyclopentadienyl | | | triphenylamine |
| ethylphosphido | trimethylsilcyclopentadienyl | | | triethyamine |
| phenylphosphido | pentamethycyclopentadienyl (when y-0) | JS' _{z-1-y} (y=0) | | triphenylphosphine |
| methylene | fluorenyl | methoxide | | tetrahydrofuran |
| dimethylmethylene | octahydrofluorenyl | ethoxide | | thiophene |
| diethylmethylene | N,N-dimethylamidocyclopentadienyl | methylthio | | dimethylsulfide |
| ethylene | dimethylphosphidocyclopentadienyl | ethylthio | | |
| dimethylethylene | methoxycyflopentadienyl | dimethylamido | | |
| dipropylethylene | (N,N-dimethylamidomethyl) | diphenylphosphido | | |
| | cyclopentadienyl | | | |

## Claims

1. A method for preparing a supported activator component for subsequent contacting with a mono-cyclopentadienyl transition metal component comprising combining:
a) a cation that is capable of irreversibly reacting with at least one ligand contained in the mono-cyclopentadienyl transition metal component;
b) an anion that is a chemically stable, non-nucleophilic anionic complex having a molecular diameter about or greater than 4 angstroms, with
c) a catalyst support material selected from alumina, silica, alumna-silica, talc, magnesia, zirconia, titania, or mixtures thereof, preferably alumina, silica, or mixtures thereof substantially free of adsorbed surface hydroxyl groups.

2. Method according to Claim 1 wherein a) and b) are dissolved with c) in an aromatic solvent at between 25 to 200°C and the solvent is removed to leave a free-flowing supported material.

3. Method according to Claim 1 wherein the support has been previously dehydrated at 300°C to 800°C for to 24 hours.

4. Method according to Claim 1 wherein the support has been previously chemically dehydrated using a hydrocarbon solution of a hydrolyzable organoadditive at temperatures of 0°C to 100°C, for 1 minute to 48 hours and/or at a ratio of millimoles of metal alkyl per gram of support is 0.1 to 100

5. Method according to Claim 1 wherein a) and b) are formed by a compound represented by the general formula:
[(L'-H)+]^{c}[(M')^{m+}Q₁Q₂···Qₙ]^{d-}
wherein:
H is a hydrogen atom;
[L'-H] is a Bronsted acid;
M' is a metal or metalloid;
Q₁ to Qₙ are, independently, hydride radicals, bridged or unbridged dialkylamido radicals, alkoxide and aryloxide radicals, substituted-hydrocarbyl radicals, halocarbyl and substituted-halocarbyl radicals and hydrocarbyl- and halocarbyl-substituted organometalloid radicals and any one, but not more than one, Q₁ to Qₙ may be a halide radical;
m is an integer representing the formal valence charge of M ; and
n is the total number of Q ligands.

6. Method of preparing a supported catalyst for the polymerization of ∝-olefins, diolefins, strained cyclic olefins, and/or acetylenically unsaturated monomers alone in combination with other unsaturated monomers, which comprises contacting the supported activator obtained according to the method of any of the preceding claims with the mono-cyclopentadienyl transition metal component in an aliphatic solvent to produce a supported catalyst.

7. Methods according to Claim 6 wherein the supported catalyst is formed as a free flowing solid or maintained in slurry state.

## Patentansprüche

1. Verfahren zur Herstellung einer trägergestützten Aktivatorkomponente zum anschließenden Inkontaktbringen mit einer Monocyclopentadienylübergangsmetallkomponente, bei dem
a) ein Kation, das irreversibel mit mindestens einem in der Monocyclopentadienylübergangsmetallkomponente enthaltenden Liganden reagieren kann, und
b) ein Anion, das ein chemisch stabiler, nichtnukleophiler anionischer Komplex mit einem Molekulardurchmesser von etwa 4 Å oder größer ist, mit
c) einem Katalysatorträgermaterial ausgewählt aus Aluminiumoxid, Siliciumdioxid, Aluminiumoxid-Siliciumdioxid, Talk, Magnesiumoxid, Zirkoniumdioxid, Titandioxid oder Mischungen derselben, vorzugsweise Aluminiumoxid, Siliciumdioxid oder Mischungen derselben, die im wesentlichen frei von adsorbierten Oberflächenhydroxylgruppen sind,
kombiniert werden.

2. Verfahren nach Anspruch 1, bei dem a) und b) mit c) in einem aromatischen Lösungsmittel bei 25 bis 200 °C gelöst werden und das Lösungsmittel entfernt wird, um ein freifließendes trägergestütztes Material zurückzulassen.

3. Verfahren nach Anspruch 1, bei dem der Träger zuvor bei 300°C bis 800°C für 1 bis 24 Stunden dehydratisiert worden ist.

4. Verfahren nach Anspruch 1, bei dem der Träger zuvor unter Verwendung einer Kohlenwasserstofflösung von hydrolisierbarem organischen Additiv bei Temperaturen von 0°C bis 100°C für eine Minute bis 48 Stunden und/oder bei einem Verhältnis von Millimolen Metallalkyl pro Gramm Träger von 0,1 bis 100 chemisch dehydratisiert worden ist.

5. Verfahren nach Anspruch 1, bei dem a) und b) durch eine Verbindung gebildet werden, die durch die allgemeine Formel:
[(L'-H)+]^{c}[(M')^{m+}Q₁Q₂...Qₙ]^{d-}
wiedergegeben wird, in der
H ein Wasserstoffatom ist,
[L'-H] eine Brönsted-Säure ist,
M' Metall oder Metalloid ist,
Q₁ bis Qₙ unabhängig Hydridreste, verbrückte oder unverbrückte Dialkylamidoreste, Alkoxid- und Aryloxidreste, substituierte Kohlenwasserstoffreste, Halogenkohlenwasserstoff- und substituierte Halogenkohlenwasserstoffreste und kohlenwasserstoff- und halogenkohlenwasserstoffsubstituierte Organometalloidreste sind und ein beliebiger, aber nicht mehr als einer von Q₁ bis Qₙ ein Halogenidrest sein kann,
m eine ganze Zahl ist, die die formale Valenzladung von M' wiedergibt, und
n die Gesamtzahl an Q-Liganden ist.

6. Verfahren zur Herstellung eines trägergestützten Katalysators für die Polymerisation von α-Olefinen, Diolefinen, gespannten cyclischen Olefinen und/oder acetylenisch ungesättigten Monomeren allein oder in Kombination mit anderen ungesättigten Monomeren, bei dem der trägergestützte Aktivator, der gemäß dem Verfahren nach einem der vorhergehenden Ansprüche erhalten worden ist, in einem aliphatischen Lösungsmittel mit der Monocyclopentadienylübergangsmetallkomponente in Kontakt gebracht wird, um einen trägergestützen Katalysator herzustellen.

7. Verfahren nach Anspruch 6, bei dem der trägergestützte Katalysator als ein freifließender Feststoff gebildet oder in einem Aufschlämmungszustand gehalten wird.

## Revendications

1. Procédé de préparation d'un constituant activateur sur support à mettre ensuite en contact avec un constituant mono-cyclopentadiényl-métal de transition comprenant le fait d'associer :
a) un cation qui est capable de réagir de façon irréversible avec au moins un ligand contenu dans le constituant mono-cyclopentadiényl-métal de transition ;
b) un anion qui est un complexe anionique non nucléophile, stable chimiquement, ayant un diamètre moléculaire supérieur ou égal à environ 4 angströms, avec
c) un matériau de support de catalyseur choisi parmi l'alumine, la silice, l'alumine-silice, le talc, la magnésie, la zircone, l'oxyde de titane, ou leurs mélanges, de préférence l'alumine, la silice, ou leurs mélanges, ne contenant pratiquement pas de groupes hydroxyle adsorbés sur la surface.

2. Procédé selon la revendication 1 dans lequel a) et b) sont dissous avec c) dans un solvant aromatique à une température comprise entre 25 et 200°C et le solvant est éliminé, laissant un matériau sur support susceptible de s'écouler de façon fluide.

3. Procédé selon la revendication 1 dans lequel le support a été déshydraté au préalable à une température de 300°C à 800°C pendant 1 à 24 heures.

4. Procédé selon la revendication 1 dans lequel le support a été déshydraté chimiquement au préalable au moyen d'une solution dans un hydrocarbure d'un organoadditif hydrolysable, à des températures de 0°C à 100°C, pendant 1 minute à 48 heures et/ou à un rapport entre le nombre de millimoles d'alkyl-métal par gramme de support de 0,1 à 100.

5. Procédé selon la revendication 1 dans lequel a) et b) sont formés par un composé représenté par la formule générale :
[(L'-H)⁺]^{c}[(M')^{m+}Q₁Q₂...Qₙ]^{d-}
dans laquelle :
H est un atome d'hydrogène ;
[L'-H] est un acide de Bronsted ;
M' est un métal ou un métalloïde ;
Q₁ à Qₙ sont, indépendamment, des radicaux hydrure, des radicaux dialkylamido pontés ou non pontés, des radicaux alcoxyde et aryloxyde, des radicaux hydrocarbyle substitué, des radicaux halogénocarbyle et halogénocarbyle substitué et des radicaux organométalloïde portant des groupes substituants hydrocarbyle et halogénocarbyle, et l'un des symboles Q₁ à Qₙ, mais pas plus d'un, peut être un radical halogénure ;
m est un nombre entier représentant la charge de valence formelle de M' ; et
n est le nombre total de ligands Q.

6. Procédé de préparation d'un catalyseur sur support pour la polymérisation d'α-oléfines, de dioléfines, d'oléfines cycliques contraintes et/ou de monomères à insaturation acétylénique, seuls ou en combinaison avec d'autres monomères insaturés, qui comprend la mise en contact de l'activateur sur support obtenu selon le procédé de l'une quelconque des revendications précédentes avec le constituant mono-cyclopentadiényl-métal de transition dans un solvant aliphatique pour produire un catalyseur sur support.

7. Procédé selon la revendication 6 dans lequel le catalyseur sur support est mis sous forme de solide susceptible de s'écouler de façon fluide ou maintenu à l'état de suspension.
